# EUROPÄISCHE PATENTANMELDUNG

(11) **EP 2 133 190 A2**
(43) Veröffentlichungstag der Anmeldung: **16.12.2009**
(21) Anmeldenummer: 09075332.8
(22) Anmeldetag: 20.03.2006
(51) Int. Cl.: B29C 49/42, B29C 49/36, B29C 49/58, B29C 49/06

(54) **Blasstation für Streckblasmaschinen**

(62) Teilanmeldung aus: 06705402.3
(71) Anmelder: Eugen Seitz AG, 8623 Wetzikon (CH)
(72) Erfinder: Rymann, Othmar, 8362 Balterswill (CH)
(74) Vertreter: EGLI-EUROPEAN PATENT ATTORNEYS

(57) **Zusammenfassung**

Es wird eine Streckblasmaschine mit einer zentralen vertikalen Drehachse (1), im Bereich der Drehachse (1) angeordnetem Drehverteiler (2) für Druckluft und Strom, radial um die Drehachse (1) angeordnete Blasstationen (3) mit jeweils mindestens einem Formkörper (4) zur Aufnahme von Flaschenrohlingen, einem gegenüber dem Formkörper (4) verschiebbar angeordneter Blaszylinder (5), am Blaszylinder (5) angeordnete Ventile zur Regelung der Zufuhr und Abfuhr von Druckluft und Leitungen zur Verbindung der Blaszylinder (5) mit dem Drehverteiler (2) gezeigt. Dabei sind die Längsachsen (A) der Blaszylinder (5) parallel zur Drehachse (1) angeordnet und es kommt jeweils die Verschieberichtung resp. Hubrichtung (H) jedes Blaszylinders (5) zum zugeordneten Formkörper (4) ebenfalls parallel zur Drehachse (1) zu liegen. Weiter sind die Ventile in einem einzigen Blasblock (7) angeordnet, der tangential in Bezug auf die Drehachse (1) seitlich am Blaszylinder (5) angeordnet ist.

## Beschreibung

Die vorliegende Erfindung betrifft eine Blasstation für Streckblasmaschine nach dem Oberbegriff von Anspruch 1 sowie eine Streckblasmaschine nach dem Oberbegriff von Anspruch 7.

Die Herstellung von Kunststoffflaschen, insbesondere von PET-Flaschen, erfolgt herkömmlicherweise mittels sogenannten Streckblasmaschinen. In diesen Streckblasmaschinen werden Flaschenrohlinge auf ihre endgültige Form aufgeblasen. Hierfür wird jeder Flaschenrohling in einer Blasstation in einen Formkörper eingeführt und dort für den eigentlichen Blasvorgang fixiert.

Der Formkörper ist dabei vorteilhaft mindestens zweiteilig aufgebaut, in welchen in geöffnetem Zustand der Flaschenrohling eingeführt wird und aus welchem nach dem Blasvorgang die fertig geblasene Flasche entfernt wird. Dabei ist der Flaschenrohling über seinen bereits seine fertige Form aufweisenden Flaschenkopf gehalten resp. fixiert.

An der Blasstation ist weiter ein gegenüber dem Formkörper verschiebbarer Blaszylinder derart angeordnet, dass er dicht gegen den jeweiligen Flaschenkopf in Anschlag gebracht werden kann. Über Zuleitungskanäle, die mit dem Blaszylinder verbunden sind, erfolgt für den Blasvorgang die Zufuhr und für den Entlüftungsvorgang die Abfuhr der Druckluft über den Flaschenkopf in den resp. aus dem Flaschenkörper.

Der Blasvorgang wird vorteilhaft zweistufig ausgeführt, mit einer ersten sogenannten Vorblasstufe, in welcher Druckluft beispielsweise mit einem Druck zwischen 4 und 20 bar in den Flaschenrohling eingeblasen wird und einer nachfolgenden eigentlichen Blasstufe, in welcher beispielsweise Druckwerte zwischen 10 bis 45 bar eingesetzt werden.

Zur Steuerung des Blas- und Entlüftungsprozesses sind dem Blaszylinder nun Ventile zugeordnet, welche zur Steuerung des Druckluftstromes zum Blaszylinder resp. dem Ablassen oder Rückführen der Druckluft nach dem Blasvorgang dienen. Für einen oben geschilderten zweistufigen Blasvorgang werden in der Regel drei Ventile eingesetzt, welche ihrerseits von Steuer- resp. Pilotventilen angesteuert werden.

In einer vorteilhaften Ausführungsform von herkömmlichen Streckblasmaschinen sind mehrere solcher Blasstationen konzentrisch um eine zentrale Achse der Streckblasmaschine angeordnet. Die Blasstationen werden um diese zentrale Achse rotierend angetrieben, um einen fortlaufenden, kontinuierlichen Produktionsprozess zu ermöglichen.

Mit derartigen Karussellmaschinen können entsprechend der Anzahl Blasstationen und der Grösse der Flaschen bis über 40'000 Flaschen / Stunde fertig geblasen werden.

Die Anordnung der Ventile und Zu- resp. Ableitungen an der Blasstation sollte derart gewählt werden, dass eine möglichste uneingeschränkte Zugänglichkeit zum Formkörper des Blaszylinders gewährleistet ist, um die Flaschenrohlinge einfach und zuverlässig zuführen zu können resp. die fertig geblasenen Flaschen auch wieder aus dem Formkörper entnehmen zu können. Weiter sollten für Wartungs und Unterhaltsarbeiten möglichst alle funktionalen Komponenten der Blasstation einfach zugänglich sein, damit hierfür nur kurze Produktionsunterbrüche in Kauf genommen werden müssen. Für eine hohe Produktionsrate müssen diese Vorgänge selbstverständlich automatisiert erfolgen.

Weiter sollen der Platzbedarf der gesamten Maschine und insbesondere deren Grundriss so klein wie möglich ausfallen, d.h. eine kompakte Bauweise wird bevorzugt.

Die Aufgabe der vorliegenden Erfindung bestand nun darin, eine Blasstation für Streckblasmaschinen zu finden, die einen möglichst platzsparenden Aufbau bei optimaler Zugänglichkeit zu den einzelnen Komponenten aufweist.

Diese Aufgabe wird erfindungsgemäss durch eine Blasstation mit den Merkmalen nach Anspruch 1 gelöst. Weitere, bevorzugte Ausführungsformen ergeben sich aus den Merkmalen der weiteren Ansprüche 2 bis 6.

Die Aufgabe wird erfindungsgemäss gelöst durch eine Blasstation für eine Streckblasmaschine mit einer zentralen vertikalen Drehachse und im Bereich der Drehachse angeordnetem Drehverteiler für Druckluft und Strom, mit jeweils mindestens einem Formkörper zur Aufnahme von Flaschenrohlingen, einem gegenüber dem Formkörper verschiebbar angeordnetem Blaszylinder, am Blaszylinder angeordnete Ventile zur Regelung der Zufuhr und Abfuhr von Druckluft und Anschlüssen für Leitungen zur Verbindung des Blaszylinders mit dem Drehverteiler. Dabei ist der Blaszylinder parallel zur Drehachse der Streckblasmaschine entlang seiner Längsachse verschiebbar vertikal oberhalb des Formkörpers in der Blasstation angeordnet. Weiter sind die Ventile in einem einzigen Blasblock angeordnet, der seitlich des Blaszylinders an der Blasstation angeordnet ist.

Durch diese Anordnung der Ventile in einem einzigen Blasblock, der seitlich am Blaszylinder angeordnet ist, ist der Platzbedarf für die Ventile sehr klein. Die Ventile selbst sind vorteilhaft ebenfalls vertikal übereinander, parallel zur Längsachse des Blaszylinders im Blasblock angeordnet und weisen damit sehr kurze Verbindungskanäle untereinander und zum Blaszylinder auf. Ein weiterer Vorteil ist darin zu sehen, dass die Zuleitungen vom zentral angeordneten Drehverteiler mit nur sehr kurzen Leitungen in radialer Richtung von der Drehachse aus direkt in den Blasblock hinein realisiert werden können.

Beispielsweise sind am Blasblock Steuer- resp. Pilotventile zur Ansteuerung der Ventile angeordnet, wobei diese vorzugsweise jeweils übereinander parallel zur Längsachse vom Blasblock gemeinsam zur Vorderseite weisend angeordnet sind. Damit sind die Steuer- resp. Pilotventile einfach von Aussen zugänglich, was die Wartung und den Unterhalt dieser Steuer- resp. Pilotventile wesentlich erleichtert. Neben der leichten Zugänglichkeit ist damit auch deren Funktionskontrolle einfach zu realisieren. Weiter können damit Betriebsunterbrüche im Falle von Wartung oder Reparaturen vorteilhaft auf eine minimal kurze Zeitspanne beschränkt werden.

Beispielsweise sind die Anschlüsse für Leitungen vom Drehverteiler her jeweils an der Rückseite des Blasblocks angeordnet. Wie bereits beschrieben, können somit sehr kurze Leitungswege realisiert werden, was einerseits die Reaktions- und Bearbeitungsgeschwindigkeit verkürzt und den Druckverlust über die kurzen Leitungslängen reduziert.

Beispielsweise ist an der Oberseite des Blasblocks parallel zur Drehachse ausgerichtet ein Ausblasventil angeordnet. Neben der Zuführung der Druckluft kann somit in gleichen Blasblock auch gleichzeitig das Ventil zum Ableiten der für den Blasprozess verbrauchten Druckluft aus dem Blaszylinder angeordnet sein.

Beispielsweise ist axial oberhalb des Ausblasventils ein Schalldämpfer angeordnet. Über diesen Schalldämpfer wird der an die Umgebung abzugebende Restdruck ausgeblasen und dabei gleichzeitig die Lärmemission in Grenzen gehalten.

Beispielsweise weist der Schalldämpfer einen Ausblaskanal mit im Wesentlichen parallel zur Längsachse des Blaszylinders verlaufender Ausblasrichtung auf. Damit wird die Ausblasluft in Kanälen annähernd parallel zur Längsachse im Schalldämpfer geführt. Damit wird auch für die Abluft kein zusätzlicher Platzbedarf in radialer Richtung in Bezug auf die Längsachse benötigt, was sich sehr positiv auf den Platzbedarf, d.h. insbesondere der benötigten Grundrissfläche der Blasstation, auswirkt. Durch die geringe Grundrissfläche kann auch der Grundriss einer mit derartigen Blasstationen ausgerüsteten Streckblasmaschine vorteilhaft sehr klein und damit kompakt dimensioniert werden.

Beispielsweise weist der Schalldämpfer einen Ausblaskanal mit im Wesentlichen senkrecht zur Längsachse des Blaszylinders verlaufender Ausblasrichtung auf, vorzugsweise senkrecht von der Rückseite der Blasstation hin nach Aussen weisend verlaufend. Wenn der zur Verfügung stehend Raum in vertikaler Richtung begrenzt ist oder nicht ausgenutzt werden soll, kann die Abluft auch radial in Richtung der Drehachse der Streckblasmaschine zurückgeführt werden und dort ggf. in einem gemeinsamen Kanal zusammengeführt und gemeinsam nach oben abgeführt werden.

Beispielsweise ist ein Steuerventil zur Steuerung der Verschiebe- resp. Hubbewegung des Blaszylinders ebenfalls seitlich am Blaszylinder angeordnet, vorzugsweise an der dem Blasblock gegenüberliegenden Seite des Blaszylinders. Hierfür wird vorteilhaft ein 5/2-weg Steuerventil eingesetzt, dessen Steuerleitungen ebenfalls vorzugsweise radial nach innen verlaufend direkt mit dem Drehverteiler verbunden sind.

Beispielsweise sind alle Bedienelemente und Funktionselemente nach Aussen zur Vorderseite der Blasstation weisend am resp. um den Blaszylinder angeordnet. Dies vereinfacht die Bedienung und allfällige Wartung und Unterhalt der Funktionselemente massgeblich. Auch können damit die Blasstationen mit nur sehr geringem Abstand zur Drehachse angeordnet und ausgeführt werden, was die Gesamtabmessung positiv beeinflusst.

Beispielsweise sind alle Bedienelemente und Funktionselemente in einem gemeinsamen Gehäuse angeordnet, welches am Blaszylinder angeordnet ist, vorzugsweise einem Zylinderträger. Damit wird einerseits eine formschöne, optisch ansprechende Einbindung der nach Aussen zugänglichen oder bedienbaren Elemente erzielt und andererseits auch eine Abdeckung der Funktionselemente erreicht, was die Wartungsarbeit erleichtert. Weiter können auch sämtliche Steuerleitungen und Druckluft- resp. Abluftleitungen von resp. zu den Ventilen in diesem gemeinsamen Gehäuse angeordnet sein.

Die Aufgabe wird weiter durch eine Streckblasmaschine nach Anspruch 7 mit einer zentralen vertikalen Drehachse und im Bereich der Drehachse angeordnetem Drehverteiler für Druckluft und Strom gelöst, bei welcher Blasstationen nach einem der Ansprüche 1 bis 10 radial um die Drehachse angeordnet sind, wobei die Aussenseite der Blasstationen radial von der Drehachse nach Aussen weisend angeordnet sind.

Die einzelnen Blasstationen können vorteilhaft an regelmässig in Umfangrichtung verteilt angeordneten Ständern in radial gleichen Abständen zur Drehachse angebracht sein. Damit können die Blasstationen um die Drehachse umlaufend betrieben werden und einen ununterbrochenen Betrieb über eine lange Betriebsdauer realisiert werden.

Bei einer Blasrotationsmaschine erfolgt dies beispielsweise durch ein um die Hochachse drehbar angetriebenes Blasrad, an welchem die Ständer resp. die Blasstationen sternförmig angeordnet sind.

Ein prinzipielles Ausführungsbeispiel der vorliegenden Erfindung wird nachstehend anhand von Figuren noch näher erläutert. Es zeigen
- Fig. 1: schematisch die Aufsicht auf einen Bereich einer Streckblasmaschine mit einer erfindungsgemässen Blasstation;
- Fig. 2: schematisch die radiale Seitenansicht auf den Bereich von Figur 1.

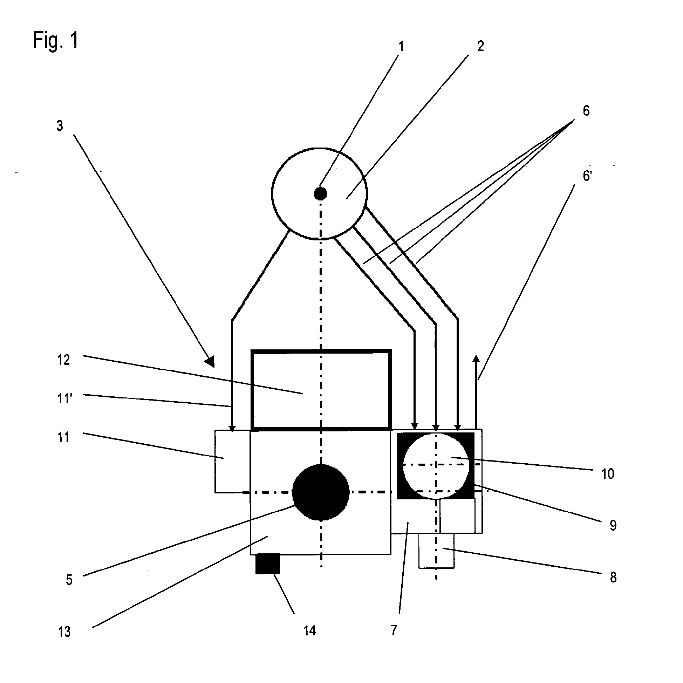

In Figur 1 ist rein schematisch die Aufsicht auf eine erfindungsgemässe Blasstation einer Streckblasmaschine dargestellt. Im Bereich der Drehachse 1 des Streckblasmaschine ist konzentrisch der Drehverteiler 2 angeordnet resp. ausgeführt. Der Drehverteiler 2 kann beispielsweise ein motorisch angetriebenes, um die Drehachse 1 rotierendes Blasrad sein.

Aus diesem Drehverteiler 2 werden die für den Blasprozess notwendige Druckluft bereitgestellt, wie auch Strom und allenfalls weitere technisch Bedingte Elemente, wie beispielsweise die Bereitstellung von Kühlwasser. Auch kann in den Drehverteiler beispielsweise eine Rückführung der sich im Bereich des Blasblocks angesammelten abzulassenden Druckluft erfolgen. Dies erfolgt beispielsweise mittels zuführenden Leitungen 6 resp. Rückführungsleitung 6'.

Eine Blasstation 3 ist radial von der Drehachse 1 beabstandet angeordnet, mit einem Maschinenständer 12, der parallel zur Hochachse 1 angeordnet ist. An diesem Maschinenständer 12 sind die Komponenten der Blasstation 3 angeordnet.

Der Blaszylinder 5 ist in einem einen rechteckigen Querschnitt aufweisenden Zylinderträger 13 entlang seiner Längsachse A verschiebbar angeordnet. Damit lässt sich der Blaszylinder 5 entsprechend der durch den Pfeil H angedeuteten Richtung parallel zur Längsachse A und damit auch parallel zur Drehachse 1 der Streckblasmaschine bewegen.

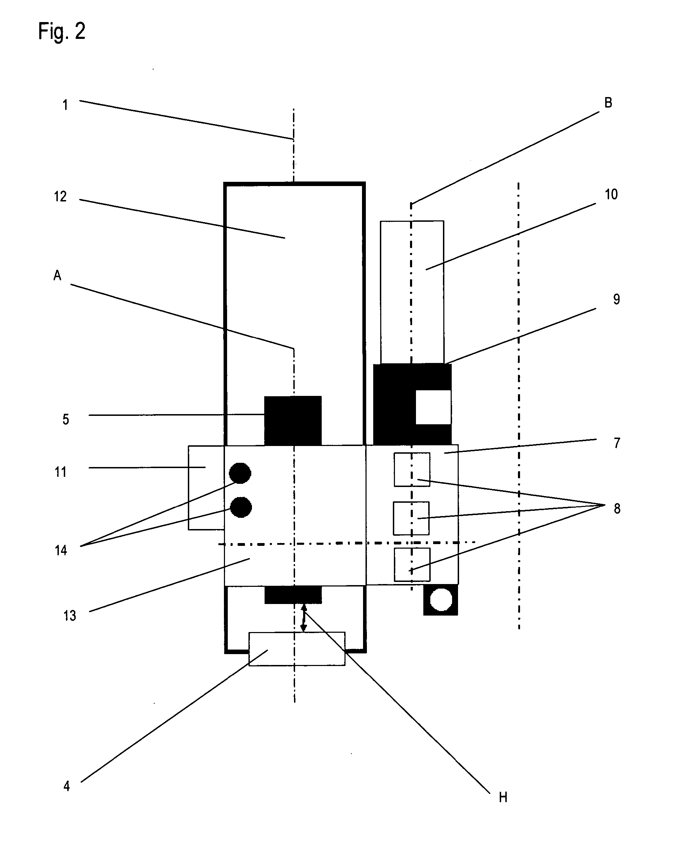

Nach unten kann damit der Blaszylinder 5 dicht gegen den Formkörper 4 in Anschlag gebracht werden, von welchem in Figur 2 lediglich dessen Oberseite schematisch dargestellt ist. In diesem Formkörper 4 wird der zu bearbeitende Flaschenrohling (nicht dargestellt) in bekannter Weise fixiert und die nach oben gerichtete Öffnung des Flaschenrohlings wird mit dem Blaszylinder 5 in Verbindung gebracht.

Der Blasblock 7 ist vorteilhaft rechts vom Blaszylinder 5 angeordnet, beispielsweise durch Befestigung am Zylinderträger 13. Im Blasblock 7 sind die für das zweistufige Blasverfahren notwendigen Ventile gemeinsam angeordnet, wie dies beispielsweise aus dem Stand der Technik bekannt ist. So sind beispielsweise ein Vorblasventil, ein Hauptblasventil und ein Sparventil unmittelbar übereinander im Blasblock 7 angeordnet.

Die Ventile sind dabei vorteilhaft übereinander in einer parallel zur Drehachse 1 verlaufenden Achse angeordnet. Die jedem dieser Ventile zugeordneten Steuer- resp. Pilotventile 8 sind nun radial von der Drehachse 1 nach Aussen hin weisend ebenfalls am Blasblock 7 angeordnet. Damit sind diese Steuer- oder Pilotventile 8 leicht von der Aussenseite der Streckblasmaschine her sichtbar und zugänglich.

Das Ausblasventil 9 ist vorteilhaft oberhalb des Blasblocks 7 in der Verlängerung der Blasblockachse B angeordnet. Vom Ausblasventil 9 führt weiter ein Schalldämpfer 10 ebenfalls in Verlängerung der Blasblockachse B weiter nach oben, parallel zur Drehachse 1. Hierfür wird vorteilhaft ein Ausblasventil 9 in koaxialer Bauweise eingesetzt. Damit kann die an die Umgebung abzuführende Abluft aus dem Blaszylinder 5 resp. der Blasstation 3 platzsparend abgeführt werden, ohne dass in radialer Richtung vom Drehzentrum 1 her hierfür ein zusätzlicher Raumbedarf bestehen würde. D. h. die notwendige Grundfläche für die Streckblasmaschine wird durch den Schalldämpfer 10 und die Abführleitungen nicht beeinflusst.

Alternativ dazu könnte der Schalldämpfer 10 auch radial nach Innen in Richtung des Drehverteilers 2 ausgebildet sein, und die Abführleitung im Bereich des Drehverteilers zentral nach oben geführt werden.

Weiter ist ebenfalls seitlich des Blaszylinders 5 auf dessen linken Seite ein 5/2-weg Steuerventil 11 angeordnet, dass der Steuerung der Hubbewegung des Blaszylinders 5 dient. Die Versorgungsleitung 11' dieses Steuerventils 11 können ebenfalls nach hinten radial in Richtung des Drehverteilers ausgeführt werden, wobei auch hier der Zugriff von vorne auf das Steuerventil 11 ungehindert gewährt bleibt. Die eigentlichen Steuerleitungen vom Steuerventil 11 zum Blaszylinder 5 sind vorteilhaft im Zylinderträger 13 integriert angeordnet.

Weitere Elemente, insbesondere Bedien- oder Anzeigeelemente wie beispielsweise Schaltknöpfe oder Zustandslampen, oder beispielsweise Abluftdrosseln 14 sind vorteilhaft an der Frontseite des Zylinderträgers 13 angeordnet und sind damit ebenfalls gut sichtbar und einfach und behinderungsfrei zugänglich.

Das gesamte Layout ist einerseits sehr kompakt und platzsparend aufgebaut, was zu kleinen Grundflächen der Streckblasmaschinen führt, und bietet andererseits eine optimale Zugänglichkeit von vorne, d.h. radial von Aussen in Richtung der Drehachse 1. Somit sind die einzelnen Komponenten sowohl gut sichtbar, einfach bedienbar und im Falle von Reparaturen, Wartungsarbeiten oder Austausch optimal zugänglich, ohne dass die Blasstation 3 hierfür teilweise oder komplett demontiert werden müsste.

## Patentansprüche

1. Blasstation für eine Streckblasmaschine, mit einer zentralen vertikalen Drehachse (1) und im Bereich der Drehachse (1) angeordnetem Drehverteiler (2) für Druckluft und Strom, mit jeweils mindestens einem Formkörper (4) zur Aufnahme von Flaschenrohlingen, einem gegenüber dem Formkörper (4) verschiebbar angeordnetem Blaszylinder (5), am Blaszylinder (5) angeordnete Ventile zur Regelung der Zufuhr und Abfuhr von Druckluft und Anschlüssen für Leitungen (6) zur Verbindung der Ventile mit dem Drehverteiler (2),
**dadurch gekennzeichnet, dass** der Blaszylinder (5) parallel zur Drehachse (1) der Streckblasmaschine entlang seiner Längsachse (A) verschiebbar vertikal oberhalb des Formkörpers (4) in der Blasstation (3) angeordnet ist sowie dass die Ventile in einem einzigen Blasblock (7) angeordnet sind, der seitlich des Blaszylinders (5) an der Blasstation (3) angeordnet ist, und an der Oberseite des Blasblocks (7) parallel zur Längsachse (A) ausgerichtet ein Ausblasventil (9) angeordnet ist.

2. Blasstation nach Anspruch 1, **dadurch gekennzeichnet, dass** axial oberhalb des Ausblasventils (9) ein Schalldämpfer (10) angeordnet ist.

3. Blasstation nach Anspruch 2, **dadurch gekennzeichnet, dass** der Schalldämpfer (10) einen Ausblaskanal mit im Wesentlich parallel zur Längsachse (A) verlaufender Ausblasrichtung aufweist.

4. Blasstation nach Anspruch 2, **dadurch gekennzeichnet, dass** der Schalldämpfer (10) einen Ausblaskanal mit im Wesentlichen senkrecht zur Längsachse (A) verlaufender Ausblasrichtung aufweist, vorzugsweise senkrecht von der Rückseite der Blasstation (3) hin nach Aussen weisend verlaufen.

5. Blasstation nach einem der Ansprüche 1 bis 4, **dadurch gekennzeichnet, dass** alle Bedienelemente und Funktionselemente nach Aussen zur Vorderseite der Blasstation (3) weisend am resp. um den Blaszylinder (5) angeordnet sind.

6. Blasstation nach Anspruch 5, **dadurch gekennzeichnet, dass** alle Bedienelemente und Funktionselemente in einem gemeinsamen Gehäuse angeordnet sind, welches am resp. um den Blaszylinder (5) herum angeordnet ist, vorzugsweise an einem Zylinderträger (13).

7. Streckblasmaschine mit einer zentralen vertikalen Drehachse (1) und im Bereich der Drehachse (1) angeordnetem Drehverteiler (2) für Druckluft und Strom, **dadurch gekennzeichnet, dass** Blasstationen (3) nach einem der Ansprüche 1 bis 6 radial um die Drehachse (1) angeordnet sind, wobei die Aussenseite der Blasstationen (3) radial von der Drehachse (1) nach Aussen weisend angeordnet sind.
